# DEMANDE DE BREVET EUROPEEN

(11) **EP 4 531 005 A1**
(43) Date de publication de la demande: **02.04.2025**
(21) Numéro de dépôt: 23306639.8
(22) Date de dépôt: 29.09.2023
(51) Int. Cl.: G06V 20/60, G06V 30/10, G06V 30/41, G06V 30/42

(54) **PROCEDE D'EXTRACTION DE DONNEES D'UN DOCUMENT GRAPHIQUE STRUCTURE, PRODUIT PROGRAMME ET SUPPORT D'ENREGISTREMENT PERMETTANT LA MISE EN OEUVRE D'UN TEL PROCEDE**

(71) Demandeur: 2JDB, 75015 Paris (FR)
(72) Inventeur: DOYEN, Julien, 92130 ISSY LES MOULINEAUX (FR); BOYER, Julien, 75012 PARIS (FR)
(74) Mandataire: Tranvouez, Edern Morgan

(57) **Abrégé**

L'invention concerne un procédé d'extraction de données d'un document graphique structuré susceptible de comprendre au moins deux types distincts de données sous forme graphique sélectionnés parmi les textes, les tableaux, les signes, les codes graphiques et les illustrations. Le procédé met en oeuvre une telle extraction de données à partir d'au moins un réseau de neurones préalablement entraîné à partir d'un procédé d'entraînement et une pluralité de modules d'extraction de données chacun adapté à un type de données sous forme graphique respectif sélectionné parmi les textes, les tableaux, les signes les codes graphiques, et les illustrations. Le procédé comprend une d'identification par l'au moins un réseau de neurones des zones du document graphique structuré et, une sélection du module d'extraction correspondant au type de données identifié.

## Description

### Domaine technique

L'invention concerne le domaine de l'extraction de données à partir de documents et plus particulièrement de documents graphiques.

L'invention a ainsi pour objet un procédé d'extraction de données d'un document graphique structuré, un produit programme permettant la mise en oeuvre d'un tel procédé et un support d'enregistrement comprenant un tel produit programme.

### État de l'art antérieur

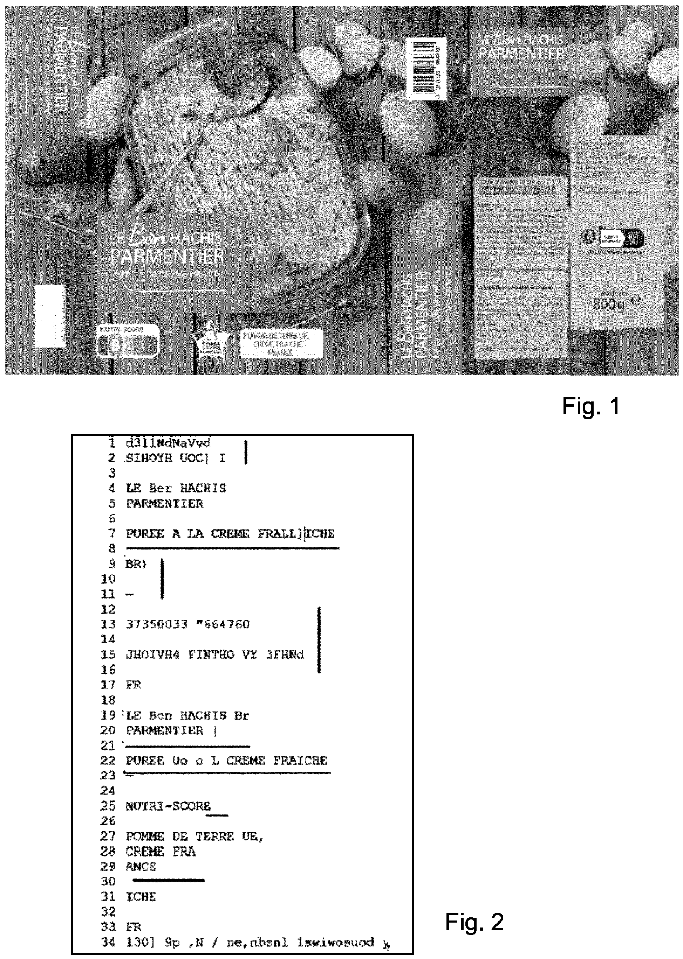

La récupération de données à partir d'un document graphique structuré, tel qu'un emballage d'un produit, un document technique ou un catalogue, n'est pas toujours chose aisé. En effet, de tels documents graphiques structurés peuvent généralement comprendre plusieurs types distincts de données sous forme graphique sélectionnés parmi les textes, les tableaux, les signes, les codes graphiques et les illustrations. Or, pour les documents comprenant d'autre chose que du texte et présentant des illustrations, tels que les emballages, les brochures publicitaires ou technique et autres catalogues, l'extraction de données est relativement complexe. En effet, comme le montre l'exemple de document fourni en figure 1, dans un tel document, les illustrations peuvent interférées avec le texte et l'utilisation de différentes polices de caractère et de couleur de texte, rendent la reconnaissance de caractères peu efficaces, voire inefficaces. C'est ainsi, ce qui est montré sur la figure 2 qui illustre le résultat d'une telle reconnaissance de caractères réalisée à partir du document de la figure 1. On peut en effet voir sur la figure 2 qu'en raison de la typographie utilisée et de la structure des données de ce document, la reconnaissance de caractères est :
- soit erronée « le bon hachis parmentier » et « Purée de crème fraîche » étant respectivement lu « Le Ber HACHIS PARMENTIER » et « puree a la creme frall]iche » ,
- soit n'ont aucune correspondance, telle que le code barre

Par « document graphique structuré » on entend ci-dessus et dans le reste de ce document, un document généralement sous forme d'un ou plusieurs fichiers informatiques comprenant des éléments graphiques, ou images. Lorsqu'un tel document est sous forme informatique, ces éléments graphiques comprenant des données à extraire sont usuellement des images matricielles comprenant un ensemble de pixels (colorés ou non). Ainsi de tels documents graphiques peuvent être par exemple des fichiers images, tels que des fichiers Jpeg, PNG, Tif, ou des fichiers conteneurs tels que des fichiers PDF, EPS ou SVG.

Par « signe » on entend ci-dessus et dans le reste de ce document, les logos, sigles et autres symboles qui peuvent être présents dans un document graphique structuré afin de fournir une information relative à l'objet du document graphique structuré, telle qu'une information technique (par exemple un nutri-score, une information relative au recyclage...), une origine (par exemple un sigle associé à une appellation d'origine contrôlée) ou une labélisation.

Par « codes graphiques », on entend tout type de codes à lecture optique, qu'ils soient à une dimension, tels que les codes-barres, ou à deux dimension, tels que les codes-barres à deux dimensions (codes à réponse rapide, flashcodes...).

Par « extraction de données sous forme graphique », on entend ici est dans le reste de ce document une extraction de ces données se trouvant sous forme graphique afin de les fournir sur une forme exploitable telle que sous la forme d'un texte, d'un tableau, d'un fichier informé, ou encore d'une information relative au signe représenté par lesdites données sous forme graphiques.

De ce fait, l'extraction de données à partir de tels documents graphiques structurés doit nécessairement faire appel à une intervention humaine, soit par une extraction directe de l'information par l'humain, ce qui peut occasionner des erreurs de saisie, soit par une reconnaissance de caractères corrigée/annotée par un humain. Ces deux solutions ne sont pas idéales puisqu'elles peuvent être à l'origine d'erreurs (notamment lorsque la saisie est purement manuelle), prendre beaucoup de temps lorsqu'un nombre important de documents doit être traité et est relativement coûteuse du fait de l'intervention humaine.

Ainsi, il y aurait un intérêt à fournir un moyen d'extraction de données à partir de documents graphiques structurés qui nécessiterait peu ou pas d'intervention humaine.

### Exposé de l'invention

L'invention vise à résoudre l'inconvénient ci-dessus et a ainsi pour but de fournir un moyen d'extraction de données à partir de documents graphiques structurés qui nécessiterait peu ou pas d'intervention humaine.

L'invention concerne à cet effet un procédé d'extraction de données d'un document graphique structuré susceptible de comprendre au moins deux types distincts de données sous forme graphique sélectionnés parmi les textes, les tableaux, les signes, les codes graphiques et les illustrations, le procédé d'extraction mettant en oeuvre une telle extraction de données à partir d'au moins un réseau de neurones préalablement entraîné à partir d'un procédé d'entraînement et une pluralité de modules d'extraction de données chacun adapté à un type de données sous forme graphique respectif sélectionné parmi les textes, les tableaux, les signes les codes graphiques, et les illustrations,
le procédé d'entraînement préalable comprenant les étapes suivantes :
   A. fourniture d'une pluralité de documents graphiques structurés, chaque document graphique structuré étant susceptible de comprendre au moins deux types distincts de données sous forme graphique sélectionnés parmi les textes, les tableaux, les signes, les codes graphiques et les illustrations, la zone respective et le type de chaque donnée ayant été préalablement identifiée pour au moins une partie des documents graphiques structurés de ladite pluralité,
   B. entraînement de l'au moins un réseau de neurones à partir de ladite base de données avec en entrées les documents graphiques structurés et en sortie les zones du document graphique identifiées comme associées à des données dudit document graphique structuré et le type de données identifié pour chacune de ces zones,
le procédé comprenant les étapes suivantes :
   D. soumission du document graphique structuré en entrée de l'au moins un réseau de neurones afin d'identifier les zones du document graphique structuré associées aux données sous forme graphique dudit document graphique structuré et le type de données identifié pour chacune de ces zones,
   E. pour chacune des zones identifiées, sélection du module d'extraction correspondant au type de données sous forme graphique identifié pour ladite zone et extraction desdites données sous forme graphique à partir du module d'extraction sélectionné.

Un tel procédé permet d'identifier de manière autonome les différents types de données et les zones associées afin de permettre leur traitement à partir d'un module parfaitement adapté. Il en résulte que l'extraction des données est optimisée et ne nécessite pas nécessairement une intervention humaine. Un tel procédé autorise ainsi un traitement des documents graphiques structurés rapide, d'éviter les erreurs de saisie et ceci avec un coût réduit, puisque ne nécessitant d'intervention humaine.

Le document graphique structuré peut être conformé avec au moins deux parties distinctes, et, préalablement à la soumission, il peut être prévu une étape C. de découpe dudit document graphique structuré en sous-parties correspondant chacun auxdites au moins deux-parties,
l'étape de soumission du document graphique structuré en entrée de l'au moins un réseau de neurones consistant en une soumission de chacune desdites sous-parties en entrée de l'au moins un réseau de neurones.

Une telle découpe préalable en sous-parties permet un traitement optimisé de ces différentes parties sans que cet agencement en parties distinctes ne pose de problème pour l'extraction de données.

Lors de la soumission du document graphique structuré, l'au moins un réseau de neurones peut être configuré détecter de manière indépendante les zones du document graphique structuré associé à chaque type de données parmi les textes, les tableaux, les signes, les codes graphiques et les illustrations.

Une telle configuration indépendante permet une détection optimisée de ces zones puisque le réseau de neurones peut avoir un entraînement spécifique pour chaque type de zones à détecter.

L'au moins un réseau de neurones peut présenter au moins deux conformations,
dans lequel pendant l'étape B d'entraînement de l'au moins un réseau de neurones du procédé d'entraînement préalable comprend les sous-étapes suivantes pour chacun des types de données à extraire :
B1. passage de l'au moins réseau de neurones dans une configuration dédiée à l'indentification dudit type de données,
B2. entraînement de l'au moins un réseau de neurones dans ladite conformation à partir de ladite base de données avec en entrées les documents graphiques structurés et en sortie les zones du document graphique identifiées comme associé à une donnée dudit document graphique dudit type de de données,
et dans lequel lors de l'étape D de soumission du document graphique structuré en entrée de l'au moins un réseau de neurones, comprend pour les sous-étapes suivantes pour chaque type de données sous forme graphique à extraire :
D1. passage de l'au moins un réseau de neurones dans une configuration dédiée à l'indentification dudit type de données,
D2. soumission du document graphique structuré en entrée de l'au moins un réseau de neurones dans ladite configuration afin d'identifier les zones du document graphique structuré associées aux données sous forme graphique dudit document graphique structuré correspondant audit type de données, chacune desdites zones identifiés étant identifiée comme associées à des données graphique dudit type de données.

Ainsi la détection des différents types de zones est optimisée.

Lors de l'étape soumission du document graphique structuré en entrée de l'au moins un réseau de neurones, il est prévu une extraction à partir de chaque zone identifiée d'un fichier graphique correspondant à ladite zone et incluant les données sous forme graphique de ladite zone identifiée.

Une telle extraction graphique de chaque zone favorise l'extraction de données à partir des modules dédiés à ce type de zone puisqu'il réduit les risques d'interférence avec les données pouvant se trouver dans une zone adjacente.

Les modules d'extractions peuvent comprendre au moins l'un parmi :
- un module d'extraction dédié aux données sous forme de textes basé sur une reconnaissance optique de caractère couplé à un sous module de traitement automatique du langage naturel,
- un module d'extraction dédié aux données sous forme de tableaux peut comprendre un sous-module de détections de lignes et de colonnes dudit tableau associé à une reconnaissance optique de caractère, ledit sous module mettant préférentiellement en oeuvre un sous module de traitement automatique du langage,
- un module d'extraction dédié aux données sous forme de signes peut être mise en oeuvre à partir d'une recherche de similarité entre la zone identifiée comme associée à des données du type signes et une base de données de signes susceptible d'être présent.

Lors de l'entraînement de l'au moins un réseau de neurones, le réseau de neurones peut être entraîné pour identifier deux ou plusieurs types de données sous forme graphique sélectionnés parmi sélectionnés parmi les textes, les tableaux, les signes, les codes graphiques et les illustrations, ledit entraînement excluant au moins un autre type de données graphiques sélectionnés parmi sélectionnés parmi les textes, les tableaux, les signes, les codes graphiques et les illustrations.

Ainsi, il peut être extrait uniquement les données d'intérêt du document structuré, les autres données étant, du fait de cet entraînement non prises en compte.

Lors de l'entraînement de l'au moins un réseau de neurones, pour au moins un type de données sous forme graphique, le réseau de neurones peut être entraîné pour distinguer au moins deux sous-types de données sous forme graphique dudit type de données sous forme graphique.

De cette manière, il est possible de discriminer lesdits sous-type de données et ainsi mieux catégoriser les données qui seront extraites.

Le procédé d'extraction de données peut comprendre en outre l'étape suivante :
F. organisation et mise en forme optionnelles des informations extraites par les modules d'extraction dans le cadre l'étape E.

Une telle mise en forme peut faciliter l'exploitation des données qui sont extraites.

L'invention concerne en outre un produit programme destiné à la mise en oeuvre d'un procédé d'extraction de données selon l'invention, ledit programme incluant un réseau de neurones préalablement entraîné à partir d'un procédé d'entraînement et une pluralité de modules d'extraction de données chacun adapté à un type de données sous forme graphique respectif sélectionné parmi les textes, les tableaux, les signes les codes graphiques, et les illustrations,
le procédé d'entraînement préalable comprenant les étapes suivantes :
   A. fourniture d'une pluralité de documents graphiques structurés, chaque documents graphiques structurés pouvant comprendre au moins deux types distincts de données sous forme graphique sélectionnés parmi les textes, les tableaux, les signes, les codes graphiques et les illustrations, la zone respective et le type de chaque donnée ayant été préalablement identifiée pour au moins une partie des documents graphiques structurés de ladite pluralité,
   B. entraînement de l'au moins un réseau de neurones à partir de ladite base de données avec en entrées les documents graphiques structurés et en sortie les zones du document graphique identifiées comme associées à des données dudit document graphique structuré et le type de données identifié pour chacune de ces zones,
dans lequel le programme comprend les instructions pour réaliser les étapes suivantes :
   D. soumission du document graphique structuré en entrée de l'au moins un réseau de neurones afin d'identifier les zones du document graphique structuré associées aux données sous forme graphique dudit document graphique structuré et le type de données identifié pour chacune de ces zones,
   E. pour chacune des zones identifiées, sélection du module d'extraction correspondant au type de données sous forme graphique identifié pour ladite zone et extraction desdites données sous forme graphique à partir du module d'extraction sélectionné.

Un tel produit programme présente les avantages liés au procédé selon l'invention dont il permet la mise en oeuvre.

Support d'enregistrement informatique lisible par un ordinateur stockant le produit programme selon l'invention.

Un tel support présente les avantages liés au programme, et le procédé afférant, selon l'invention dont il permet le stockage.

### Brève description des dessins

La présente invention sera mieux comprise à la lecture de la description d'exemples de réalisation, donnés à titre purement indicatif et nullement limitatif, en faisant référence aux dessins annexés sur lesquels :
- la figure 1 illustre un exemple de document graphique structuré dont les données sont à même d'être extraites par un procédé selon l'invention,
- la figure 2 illustre un extraction de données par simple reconnaissance de caractères telle qu'elle est réalisée dans l'art antérieur,
- les figures 3A et 3B sont des ordinogramme présentant respectivement les principales étapes du procédé d'entraînement et celles du procédé d'extraction selon l'invention,
- les figures 4A à 4D illustrent l'identification des zones du document telle que permise par le procédé selon l'invention,
- les figures 5A et 5C illustrent respectivement et schématiquement le résultat de l'extraction de données pour une zone dont les données graphiques sont du type texte, une zone dont les données graphiques sont du type tableau et trois zones dont les données graphiques sont du type signe.

Des parties identiques, similaires ou équivalentes des différentes figures portent les mêmes références numériques de façon à faciliter le passage d'une figure à l'autre.

Les différentes parties représentées sur les figures ne le sont pas nécessairement selon une échelle uniforme, pour rendre les figures plus lisibles.

Les différentes possibilités (variantes et modes de réalisation) doivent être comprises comme n'étant pas exclusives les unes des autres et peuvent se combiner entre elles.

### Exposé détaillé de modes de réalisation particuliers

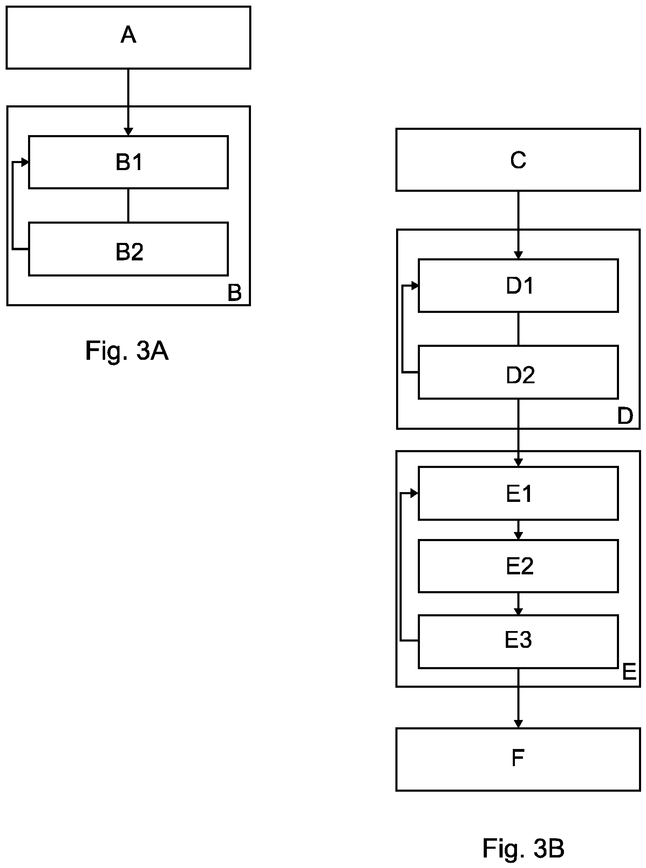

Les figures 3A et 3B sont des ordinogrammes présentant les étapes principales d'un entraînement d'au moins un réseau de neurones et d'un procédé d'extraction selon l'invention afin d'extraire des données d'un document graphique structuré 1, illustré sur la figure 1, susceptible de comprendre au moins deux types distincts de données sous forme graphique sélectionnés parmi les textes, les tableaux, les signes, les codes graphiques et les illustrations.

Bien entendu, si dans le cadre du procédé de l'invention, les documents graphiques structurées visés sont principalement les bons à tirer utilisés dans le cadre de l'impression de documents à visé commercial, tel que des emballages de produits que ceux soient alimentaires ou manufacturés, des catalogues commerciaux ou des documents techniques, l'invention ne se limite à cette seule utilisation. Ainsi, l'invention peut également s'appliquer à des photos d'emballages ou de documents techniques ou tout autre document graphique, c'est-à-dire comprenant des images, présentant des données sous forme graphique et de manière structurée, c'est-à-dire organisée.

De même si les documents graphiques structurés dont des données sont susceptibles d'être extraites peuvent comprendre au moins deux types distincts de données sous forme graphique sélectionnés parmi les textes, les tableaux, les signes, les codes graphiques et les illustrations, lors de la mise en oeuvre du procédé et selon les besoins, seules une partie de ces types de données peuvent être exploités. Ainsi, selon un exemple d'exploitation du procédé selon l'invention, le procédé d'extraction peut être configuré pour extraire l'ensemble des types de données à l'exception d'un ou plusieurs types de données tels que les données du type illustration ou code graphique. Selon cette possibilité, le procédé peut être configuré pour identifier uniquement des zones associées aux données des types à extraire, par exemple, les zones associées aux données des types textes, tableaux, et signes.

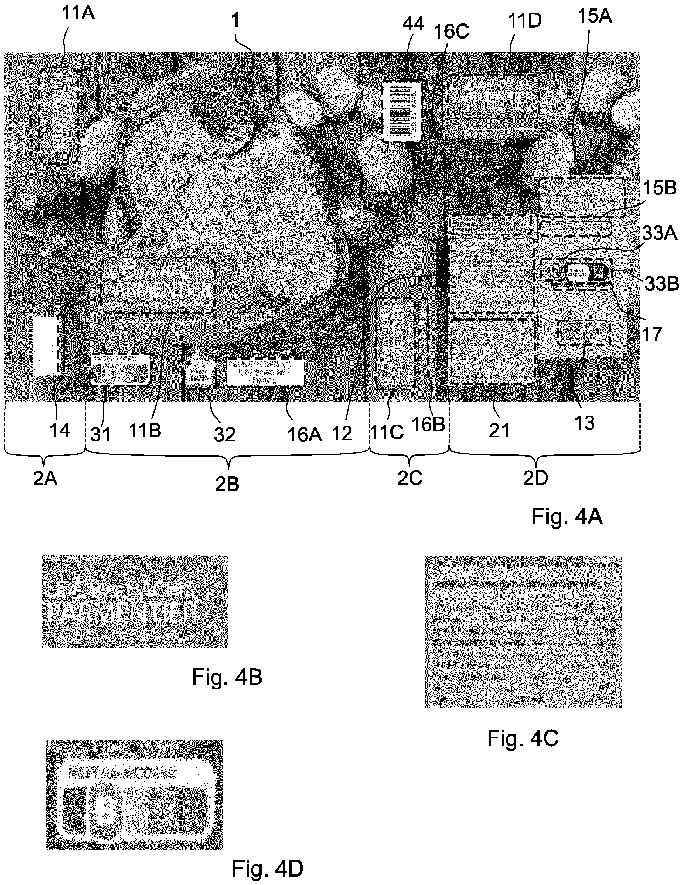

Afin d'illustré un exemple de mise en oeuvre de l'invention, la figure 1 fourni ainsi un tel exemple de document graphique structuré 1 à partir duquel des données sous forme graphique sont susceptibles d'être extrait. Ce document graphique structuré 1 est un emballage d'un produit alimentaire comprenant, comme le montre la figure 4A, quatre parties 2A, 2B, 2C, 2D, représentant respectivement une face avant, un premier côté, un deuxième côté et une face arrière de l'emballage. La face arrière 2D est partiellement représentée, une portion ne comprenant pas de données graphiques d'intérêt ayant été coupée.

On notera que par document graphique structuré « conformé avec au moins deux parties distinctes », il est entendu ci-dessus et dans le reste du présent document, que le document graphique structuré présente les données graphiques sous une forme d'au moins deux parties consultables indépendamment l'une de l'autre, telles que les faces d'un même emballage, les pages d'un document papier ou électroniques.

Comme le montre la figure 4A, illustrent les zones associées données sous forme graphiques relatives à ce produit et qui doivent être extraites dont :
- une dénomination commerciale 11A, 11B, 11C, 11D en tant que données textuelles,
- un descriptif du produit présentement associé dans la dénomination commerciale 11A, 11B, 11C, 11D en tant que données textuelles,
- une liste d'ingrédient 12 en tant que données textuelles,
- une quantité estimée 13 du produit en tant que données textuelles,
- une Information 14 relative à une date limite de consommation en tant que données textuelles,
- un conseil d'utilisation et de conservation 15A, 15B en tant que données textuelles,
- des informations complémentaires relatifs 16A, 16B, 16C au produit (dénomination légale, origines, allégations) en tant que données textuelles,
- des informations textuelles relatives au recyclage de l'emballage 17 en tant que données textuelles,
- une déclaration nutritionnelle 21 en tant que données sous forme de tableau,
- un logo relatif au nutri-score 31 en tant que données symboliques (ou données de signalisation),
- un logo relatif à l'origine de la viande 32 en tant que données symboliques (ou données de signalisation),
- deux logos relatifs au recyclage de l'emballage 33A, 33B en tant que données symboliques (ou données de signalisation),
- des code-barres 44 en tant que données du type codes graphiques,
- une illustration sur chacune des faces 2A, 2B, 2C, 2D représentant le produit emballé et ces ingrédients, non référencé.

Les figures 4B à 4D illustrent, comme cela est discuté ci-après, des exemples d'image susceptibles d'être obtenus dans le cadre l'identification de zones de données telle que permise par l'invention à partir du document graphique structuré de la figure 1. La figure 4B illustre ainsi une zone associée à un type de données textuelles, la figure 4C illustre une zone associée à un type de données sous forme de tableau et la figure 4D illustre une zone associée à un type de données symboliques (ou de données de signalisation).

Conformément à l'invention, selon le procédé de l'invention l'extraction de données est mise en oeuvre au moyen d'au moins un réseau de neurones. Afin de permettre l'extraction de données, le réseau de neurones est préalablement entraîné à partir d'un procédé d'entraînement. Comme illustré par l'ordinogramme la figure 4A, ce procédé d'entraînement comprend les étapes suivantes :
A. fourniture d'une pluralité de documents graphiques structurés, chaque document graphique structuré étant susceptible de comprendre au moins deux types distincts de données sous forme graphique sélectionnés parmi les textes, les tableaux, les signes, les codes graphiques et les illustrations, la zone respective et le type de chaque donnée ayant été préalablement identifiée pour au moins une partie des documents graphiques structurés de ladite pluralité,
B. entraînement de l'au moins un réseau de neurones à partir de ladite base de données avec en entrées les documents graphiques structurés et en sortie les zones du document graphique identifiées comme associé à une donnée dudit document graphique et le type de données identifié pour chacune de ces zones.

Dans la présente mise en oeuvre de l'invention qui est décrite en lien avec la figure 1, les données graphiques à extraire sont uniquement des données sous forme de textes, de tableaux et de signes, la pluralité de documents graphiques structurés utilisée pour l'entraînement du réseau de neurones peut n'avoir que les zones respectives et le type des données identifiés pour les données sous forme graphique du type textes, tableaux et signes. Sur cette base, l'au moins un réseau de neurones peut ainsi être entraîné à ne pas tenir compte des données sous forme de codes graphiques et d'illustrations.

Afin d'optimiser l'entraînement et la reconnaissance des zones du document associées à chaque type de données, l'au moins un réseau de neurones peut présenter une conformation associée à chaque type de données qui sont à extraire et dans laquelle il a été spécifiquement entraîné à identifier les zones associées à ce seul type de données.

Selon cette possibilité, l'étape B d'entraînement de l'au moins un réseau de neurones comprend les sous étapes suivantes pour chacun des types de données à extraire :
B1. passage du réseau de neurones dans une configuration dédiée à l'indentification dudit type de données,
B2. entraînement de l'au moins un réseau de neurones dans ladite conformation à partir de ladite base de données avec en entrées les documents graphiques structurés et en sortie les zones du document graphique identifiées comme associé à une donnée dudit document graphique dudit type de de données.

Ainsi, dans la présente mise en oeuvre de l'invention, l'au moins un réseau de neurones peut avoir trois conformations, une première correspondant aux données sous forme de textes, une deuxième correspondant aux données sous formes de tableaux, et une troisième correspondant aux données sous forme de signes. Chacune de ces conformations correspond à un entraînement spécifique pour identifier les zones d'un document graphique structuré 1 associé au type de données correspondant à ladite conformation.

Afin de faciliter l'extraction des données, l'au moins un réseau de neurones peut être en outre configuré pour fournir en sortie un fichier graphique (fichier image) correspondant à chaque zone identifiée.

En variante, l'au moins réseau de neurones peut être conformé pour fournir une information relative à la position de chaque zone sur le document graphique structuré 1, tel que des coordonnées desdites zones, et il peut être prévu un module configuré pour fournir, à partir de l'information relative à la position de chaque zone, extraire lesdites zones sous la forme de fichiers graphiques (fichiers images).

Selon une possibilité de l'invention, dans le cadre d'application spécifique, l'au moins un réseau de neurones peut en outre être configuré pour identifier les zones du document graphique structuré 1 associé à un sous-type de données sous forme graphique spécifique, tel que par exemple une liste d'ingrédients qui est un type de données sous forme graphique spécifique aux emballages alimentaires. De cette manière, il est possible d'extraire qu'une partie spécifique des données graphiques du document afin de faire une analyse spécifique de ce document.

Selon cette même possibilité, il peut également être mis en oeuvre un ou plusieurs modules d'extraction associés à ce sous-type de données sous forme graphique spécifique.

Conformément à l'invention, en outre de l'au moins un réseau de neurones, il est prévu une pluralité de modules d'extraction chacun correspondant à un type de données respectif sélectionné parmi les textes, les tableaux, les signes, les codes graphiques et les illustrations. Un tel module d'extraction est conformé pour fournir, à partir des données sous forme graphique présente dans la zone correspondante, les informations fournies par lesdites données sous forme graphique dans une forme exploitable telle que sous la forme d'un texte, d'un tableau, d'un fichier informé, ou encore d'une information relative au signe représenté par lesdites données sous forme graphiques.

Plus spécifiquement, dans le cadre de la présente mise en oeuvre de l'invention, il peut être prévu trois modules d'extraction, un premier correspondant aux données sous forme de textes, un deuxième correspondant aux données sous formes de tableaux, et un troisième correspondant aux données sous forme de signes.

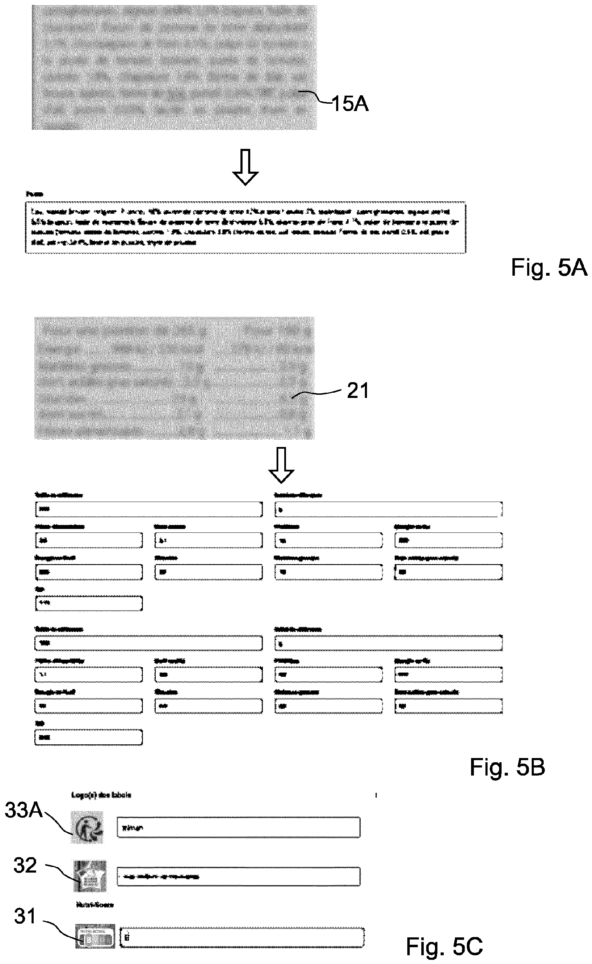

Le premier module d'extraction dédié aux données sous forme de textes peut être basé sur une reconnaissance optique de caractère (plus connu pas son sigle anglais « OCR ») couplé à un sous module de traitement automatique du langage naturel (également connu sous son sigle anglais « NLP » pour Natural Langage Processing) afin de corriger les erreurs de reconnaissance. Le sous module de traitement automatique du langage naturel peut, selon les applications, être adapté par apprentissage automatique aux contextes de l'extraction de données. Ainsi, selon le présent exemple de mise en oeuvre, le sous module de traitement automatique du langage naturel peut être adapté au contexte du domaine de l'alimentation. Un tel premier module d'extraction peut être configuré, comme illustré sur la figure 5A, pour extraire une information textuelle à partir des données présentes dans la zone identifiée.

Le deuxième module d'extraction dédié aux données sous forme de tableaux peut comprendre un sous-module de détections de lignes et de colonnes dudit tableau associé à une reconnaissance optique de caractère (plus connu pas son sigle anglais « OCR »). De cette manière, il est possible d'identifier les différentes données du tableau et les organiser sur la base des lignes et de colonnes identifiées. D'une même manière que le premier module d'extraction, le deuxième module d'extraction peut également mettre en oeuvre un sous module de traitement automatique du langage (distinct ou identique au premier module d'extraction) afin de corriger les éventuelles erreurs de reconnaissance. Un tel deuxième module d'extraction peut être configuré, comme illustré sur la figure 5B, pour extraire une pluralité d'informations textuelles organisé en conformité de la structure du tableau présent dans la zone identifiée.

Le troisième module d'extraction dédié aux données sous forme de signes peut être mise en oeuvre à partir d'une recherche de similarité entre la zone identifiée comme associée à des données du type signes et une base de données de signes susceptible d'être présent. Une telle base de données peut, par exemple, avoir était constituée dans le cadre de la phase d'apprentissage de l'au moins un réseau de neurones. En variante, cette base de données peut avoir été déterminée en fonction du contexte de l'extraction de données. La recherche de similarité peut être réalisé à partir d'un procédé de recherche de similarité comprenant les étapes suivantes :
- définition d'une pluralité de caractéristiques représentatives, telles qu'une couleur dominante de ce dernier ou une valeur de contraste, d'un signe,
- détermination, pour chacun des signes de la base de données de valeurs associées à ces caractéristiques, l'ensemble de valeurs obtenues pour un signe de la base de données permettant de définir un vecteur de dimension n dudit signe, n'étant le nombre de caractéristiques représentatives,
- détermination à partir du fichier image fourni pour la zone du document graphique structuré 1 associée à des données du type signe des n caractéristiques représentatives de ladite zone afin de définir un vecteur de dimension n dudit signe,
- calcul d'une distance entre le vecteur associé à la zone du document graphique structuré 1 et chacun des vecteurs, lesdites distances (par exemple une distance euclidienne), représentant une valeur de dissimilarité entre le la zone du document graphique structuré et ledit sigle,
- identification du la sigle associé à ladite zone du document graphique structuré 1 sur la base du sigle de la base de données présentant la valeur de dissimilarité la plus faible.

Un tel troisième module d'extraction peut être configuré, comme illustré sur la figure 5C, pour extraire une information, tel qu'une information technique (par exemple un nutri-score, une information relative au recyclage...), une origine (par exemple un sigle associé à une appellation d'origine contrôlée) ou une labélisation, associé au signe identifié. Dans le présent exemple illustré sur la figure 5C, il a été d'identifié que l'emballage est recyclable, la viande du produit est d'origine française et que le nutri-score du produit est B.

En ce qui concerne les autres types de données, non prises en charge dans le cadre du présent exemple de mise en oeuvre, les modules d'extraction peuvent être des modules du commerce déjà connus, tels que par exemple, pour les données du type codes graphiques, un module de lectures de code à une et deux dimensions et pour les données du type illustrations, un système de collecte d'image afin d'ajouter les fichiers graphiques à une base de données dans lequel doit être enregistrer les informations du ou des produits auxquels est associé le document graphique structuré.

Le procédé d'extraction selon l'invention, mis en oeuvre à partir de l'au moins un réseau de neurones et les modules d'extractions explicités ci-dessus, peut comprendre les étapes suivantes :
C. Lorsque le document graphique structuré 1 est conformé avec au moins deux parties distinctes, étape optionnelle de découpe dudit document graphique structuré en sous-parties correspondant chacun auxdites au moins deux-parties,
D. soumission du document graphique structuré 1 en entrée de l'au moins un réseau de neurones afin d'identifier les zones du document graphique structuré associées aux données sous forme graphique dudit document graphique structuré et le type de données identifié pour chacune de ces zones,
E. pour chacune des zones identifiées, sélection du module d'extraction correspondant au type de données sous forme graphique identifié pour ladite zone et extraction desdites données sous forme graphique à partir du module d'extraction sélectionné,
F. organisation et mise en forme optionnelles des informations extraites par les modules d'extraction dans le cadre l'étape E..

Bien entendu, lorsque le document graphique structuré 1 est conformé avec au moins deux parties distinctes et qu'il est mis en oeuvre une découpe selon l'étape C, lors de soumission du document graphique structuré 1, le document graphique structuré 1 est soumis à l'au moins réseau de neurones au travers des sous-parties du document graphique structuré 1. Ainsi, dans le cas du présent, le document graphique structuré 1 comprenant quatre partie 2A, 2B, 2C, 2D, l'étape C permet une fourniture du document graphique structuré 1 en quatre parties 2A, 2B, 2C, 2D correspondant aux deux faces 2A, 2D et aux deux côtés de l'emballage.

Dans le cas où l'au moins un réseau de neurones présente une conformation respective associée à chaque type de données qui sont à extraire et dans laquelle il a été spécifiquement entraîné à identifier les zones associées à ce seul type de données, l'étape de soumission du document graphique structuré 1 en entrée de l'au moins un réseau de neurones, il peut être prévu, pour chaque type de données qui sont à extraire, les sous-étapes suivantes :
D1. passage de l'au moins un réseau de neurones dans la configuration dédiée à l'indentification dudit type de données,
D2. soumission du document graphique structuré en entrée de l'au moins un réseau de neurones dans ladite configuration afin d'identifier les zones du document graphique structuré associées aux données sous forme graphique dudit document graphique structuré correspondant audit type de données, chacune desdites zones identifiés étant identifiée comme associées à des données graphiques dudit type de données.

Comme précisé plus haut, lors de l'identification de chacune des zones associées à des données graphiques, l'au moins un réseau de neurones peut être en outre configuré pour fournir en sortie un fichier graphique (fichier image) correspondant à chaque zone identifiée. Selon d'autres variantes non illustrées dans l'organigramme en figure 4A, il peut :
- soit être prévu un module configuré pour fournir, à partir de l'information relative à la position de chaque zone, extraire lesdites zones sous la forme de fichiers graphiques (fichiers images),
- soit être prévu que l'au moins un réseau de neurones fournisse l'information relative à la position de chaque zone aux modules d'extractions, les modules d'extractions étant alors configurés pour extraire les données sous forme graphiques à partir du document graphique structuré (ou d'une ou ses parties dans le cas où il est mis en oeuvre l'étape C) et des informations fournies relative à la position de chaque zone

Une fois chacune des zones associées à des données sous forme graphique de chacun des types de données identifiées par l'au moins un réseau de neurones, pour chaque zone identifiée, dans le cadre de l'étape E. d'extraction desdites données sous forme graphique, il peut être prévu les sous-étapes suivantes :
E1. sélection du module d'extraction correspondant au type de données sous forme graphique identifié pour ladite zone,
E2. extraction des informations relatives aux données sous forme graphique de ladite zone par ledit module.

Bien entendu, si ces sous-étapes E1. et E2. peuvent être mise en oeuvre pour chacune des zones identifiées, d'autres possibilités sont parfaitement envisageables sans que l'on sorte du cadre de l'invention. Ainsi par exemple, il est parfaitement envisageable que :
- les zones correspondant à un type de données sous forme graphique soient traitées après la section du module d'extraction correspondant, la sélection du module d'extraction adapté étant réalisé à chaque changement du type de donnée graphique des zones dont les données doivent être extraites,
- que les modules d'extraction soient configurés pour fonctionner en parallèle, les informations relatives à une zone (ou le fichier graphique) pouvant être directement adressées au module d'extraction correspondant dès son identification par l'au moins un réseau de neurones.

Conformément à l'invention, les modules d'extraction sont configurés pour fournir en sortie les informations extraites des données graphiques d'un type de données graphiques. Cette sortie d'information peut se faire de différentes formes sans que l'on sorte du cadre de l'invention. Ainsi, selon une première possibilité, lesdites informations peuvent être fourni indépendamment de celles des autres zones du document

Selon cette possibilité, il peut être prévu un module d'organisation des informations extraites par les modules d'extraction dans le cadre l'étape E.. Un tel module permet, de fournir, à partir des informations extraites du document graphique structuré, un ou plusieurs fichiers intégrants lesdites informations sous un format exploitable. De tels fichiers peuvent par exemple être un format renseigné tel qu'un fichier JSON (sigle anglais de notation d'objet JavaScript, c'est-à-dire « JavaScript Object Notation »). De même dans le cadre du présent exemple d'application, le module d'organisation peut fournir un fichier sous le format d'une fiche GDSN (sigle anglais de réseau de synchronisation de données universel, c'est-à-dire « Global Data Synchronisation Network) comprenant les informations relatives au produit destiné à être emballé dans le présent emballage.

En variante, les modules d'extraction peuvent être configurés pour fournir des données directement exploitables, englobant, par exemple, outre l'information extraite, un identifiant du document structuré graphique à partir duquel l'extraction a été réalisée.

La mise en oeuvre du présent procédé d'extraction et du procédé d'entraînement préalable peuvent être mise en oeuvre à partir d'un dispositif mobile (tel qu'un téléphone intelligent), d'une électronique dédiée, d'un ordinateur, d'un serveur, d'une grappe de serveurs ou encore d'une combinaison de ces différents appareils ou groupe d'appareil. Ainsi, il est parfaitement envisageable dans le cadre de la présente invention que la soumission du document structuré graphique se fasse au travers d'un appareil mobile configuré pour soumettre ledit document structuré graphique à un serveur hébergeant l'au moins un réseau et lesdits modules d'extraction et que l'identification et ladite extraction soient réalisées par ledit serveur.

Dans ce cadre, l'invention concerne également un produit programme destiné à la mise en oeuvre du présent procédé d'extraction de données, ledit programme incluant un réseau de neurones préalablement entraîné à partir d'un procédé d'entraînement et une pluralité de modules d'extraction de données chacun adapté à un type de données sous forme graphique respectif sélectionné parmi les textes, les tableaux, les signes les codes graphiques, et les illustrations.

Conformément à l'invention, ledit produit programme comprend les instructions pour la mise en oeuvre du procédé d'entraînement préalable comprenant les étapes suivantes :
A. fourniture d'une pluralité de documents graphiques structurés, chaque document graphique structuré étant susceptible de comprendre au moins deux types distincts de données sous forme graphique sélectionnés parmi les textes, les tableaux, les signes, les codes graphiques et les illustrations, la zone respective et le type de chaque donnée ayant été préalablement identifiée pour au moins une partie des documents graphiques structurés de ladite pluralité,
B. entraînement de l'au moins un réseau de neurones à partir de ladite base de données avec en entrées les documents graphiques structurés et en sortie les zones du document graphique identifiées comme associées à des données dudit document graphique structuré et le type de données identifié pour chacune de ces zones.

### De même, ce produit

De même, le présent produit programme comprend également les instructions pour réaliser les étapes suivantes :
D. soumission du document graphique structuré en entrée de l'au moins un réseau de neurones afin d'identifier les zones du document graphique structuré associées aux données sous forme graphique dudit document graphique structuré et le type de données identifié pour chacune de ces zones,
E. pour chacune des zones identifiées, sélection du module d'extraction correspondant au type de données sous forme graphique identifié pour ladite zone et extraction desdites données sous forme graphique à partir du module d'extraction sélectionné.

L'invention concerne également un Support d'enregistrement informatique lisible par un ordinateur stockant le produit programme ci-dessus.

## Revendications

1. Procédé d'extraction de données d'un document graphique structuré susceptible de comprendre au moins deux types distincts de données sous forme graphique sélectionnés parmi les textes, les tableaux, les signes, les codes graphiques et les illustrations, le procédé d'extraction étant **caractérisé en ce qu'**il met en oeuvre une telle extraction de données à partir d'au moins un réseau de neurones préalablement entraîné à partir d'un procédé d'entraînement et une pluralité de modules d'extraction de données chacun adapté à un type de données sous forme graphique respectif sélectionné parmi les textes, les tableaux, les signes les codes graphiques, et les illustrations,
le procédé d'entraînement préalable comprenant les étapes suivantes :
A. fourniture d'une pluralité de documents graphiques structurés, chaque documents graphiques structurés pouvant comprendre au moins deux types distincts de données sous forme graphique sélectionnés parmi les textes, les tableaux, les signes, les codes graphiques et les illustrations, la zone respective et le type de chaque donnée ayant été préalablement identifiée pour au moins une partie des documents graphiques structurés de ladite pluralité,
B. entraînement de l'au moins un réseau de neurones à partir de ladite base de données avec en entrées les documents graphiques structurés et en sortie les zones du document graphique identifiées comme associées à des données dudit document graphique structuré et le type de données identifié pour chacune de ces zones,
le procédé comprenant les étapes suivantes :
D. soumission du document graphique structuré en entrée de l'au moins un réseau de neurones afin d'identifier les zones du document graphique structuré associées aux données sous forme graphique dudit document graphique structuré et le type de données identifié pour chacune de ces zones,
E. pour chacune des zones identifiées, sélection du module d'extraction correspondant au type de données sous forme graphique identifié pour ladite zone et extraction desdites données sous forme graphique à partir du module d'extraction sélectionné.

2. Procédé d'extraction de données selon la revendication 1, dans lequel le document graphique structuré est conformé avec au moins deux parties distinctes, et dans lequel, préalablement à la soumission, il est prévu une étape C. de découpe dudit document graphique structuré en sous-parties correspondant chacun auxdites au moins deux-parties,
dans lequel, l'étape de soumission du document graphique structuré en entrée de l'au moins un réseau de neurones consiste en une soumission de chacune desdites sous-parties en entrée de l'au moins un réseau de neurones.

3. Procédé d'extraction de données selon la revendication 1 ou 2, dans lequel, lors de la soumission du document graphique structuré, l'au moins un réseau de neurones est configuré détecter de manière indépendante les zones du document graphique structuré associé à chaque type de données parmi les textes, les tableaux, les signes, les codes graphiques et les illustrations.

4. Procédé d'extraction de données selon la revendication 3, dans laquelle l'au moins un réseau de neurones présente au moins deux conformations,
Dans lequel pendant l'étape B d'entraînement de l'au moins un réseau de neurones du procédé d'entraînement préalable comprend les sous-étapes suivantes pour chacun des types de données à extraire :
B1. passage de l'au moins réseau de neurones dans une configuration dédiée à l'indentification dudit type de données,
B2. entraînement de l'au moins un réseau de neurones dans ladite conformation à partir de ladite base de données avec en entrées les documents graphiques structurés et en sortie les zones du document graphique identifiées comme associé à une donnée dudit document graphique dudit type de de données,
et dans lequel lors de l'étape D de soumission du document graphique structuré en entrée de l'au moins un réseau de neurones, comprend pour les sous-étapes suivantes pour chaque type de données sous forme graphique à extraire :
D1. passage de l'au moins réseau de neurones dans une configuration dédiée à l'indentification dudit type de données,
D2. soumission du document graphique structuré en entrée de l'au moins un réseau de neurones dans ladite configuration afin d'identifier les zones du document graphique structuré associées aux données sous forme graphique dudit document graphique structuré correspondant audit type de données, chacune desdites zones identifiés étant identifiée comme associées à des données graphique dudit type de données.

5. Procédé d'extraction de données selon l'une quelconque des revendications 1 à 4, dans lequel lors de l'étape soumission du document graphique structuré en entrée de l'au moins un réseau de neurones, il est prévu une extraction à partir de chaque zone identifiée d'un fichier graphique correspondant à ladite zone et incluant les données sous forme graphique de ladite zone identifiée.

6. Procédé d'extraction de données selon l'une quelconque des revendications 1 à 5, dans lequel les modules d'extractions comprennent au moins l'un parmi :
- un module d'extraction dédié aux données sous forme de textes basé sur une reconnaissance optique de caractère couplé à un sous module de traitement automatique du langage naturel,
- un module d'extraction dédié aux données sous forme de tableaux peut comprendre un sous-module de détections de lignes et de colonnes dudit tableau associé à une reconnaissance optique de caractère, ledit sous module mettant préférentiellement en oeuvre un sous module de traitement automatique du langage,
- un module d'extraction dédié aux données sous forme de signes peut être mise en oeuvre à partir d'une recherche de similarité entre la zone identifiée comme associée à des données du type signes et une base de données de signes susceptible d'être présent.

7. Procédé d'extraction de données selon l'une quelconque des revendications 1 à 6, dans lequel lors de l'entraînement de l'au moins un réseau de neurones, le réseau de neurones est entraîné pour identifier deux ou plusieurs types de données sous forme graphique sélectionnés parmi sélectionnés parmi les textes, les tableaux, les signes, les codes graphiques et les illustrations, ledit entraînement excluant au moins un autre type de données graphiques sélectionnés parmi sélectionnés parmi les textes, les tableaux, les signes, les codes graphiques et les illustrations.

8. Procédé d'extraction de données selon l'une quelconque des revendications 1 à 7, dans lequel lors de l'entraînement de l'au moins un réseau de neurones, pour au moins un type de données sous forme graphique, le réseau de neurones est entraîné pour distinguer au moins deux sous-types de données sous forme graphique dudit type de données sous forme graphique.

9. Procédé d'extraction de données selon l'une quelconque des revendications 1 à 8 comprenant en outre l'étape suivante :
F. organisation et mise en forme optionnelles des informations extraites par les modules d'extraction dans le cadre l'étape E.

10. Produit programme destiné à la mise en oeuvre d'un procédé d'extraction de données selon l'une quelconque des revendications 1 à 9, ledit programme incluant un réseau de neurones préalablement entraîné à partir d'un procédé d'entraînement et une pluralité de modules d'extraction de données chacun adapté à un type de données sous forme graphique respectif sélectionné parmi les textes, les tableaux, les signes les codes graphiques, et les illustrations,
le procédé d'entraînement préalable comprenant les étapes suivantes :
A. fourniture d'une pluralité de documents graphiques structurés, chaque documents graphiques structurés pouvant comprendre au moins deux types distincts de données sous forme graphique sélectionnés parmi les textes, les tableaux, les signes, les codes graphiques et les illustrations, la zone respective et le type de chaque donnée ayant été préalablement identifiée pour au moins une partie des documents graphiques structurés de ladite pluralité,
B. entraînement de l'au moins un réseau de neurones à partir de ladite base de données avec en entrées les documents graphiques structurés et en sortie les zones du document graphique identifiées comme associées à des données dudit document graphique structuré et le type de données identifié pour chacune de ces zones,
dans lequel le programme comprend les instructions pour réaliser les étapes suivantes :
D. soumission du document graphique structuré en entrée de l'au moins un réseau de neurones afin d'identifier les zones du document graphique structuré associées aux données sous forme graphique dudit document graphique structuré et le type de données identifié pour chacune de ces zones,
E. pour chacune des zones identifiées, sélection du module d'extraction correspondant au type de données sous forme graphique identifié pour ladite zone et extraction desdites données sous forme graphique à partir du module d'extraction sélectionné.

11. Support d'enregistrement informatique lisible par un ordinateur stockant le produit programme selon la revendication 10.
